# EUROPÄISCHE PATENTSCHRIFT

(11) **EP 2 834 116 B1**
(45) Veröffentlichungstag und Bekanntmachung des Hinweises auf die Patenterteilung: **17.10.2018**
(21) Anmeldenummer: 13715193.2
(22) Anmeldetag: 04.04.2013
(51) Int. Cl.: B60T 17/00, F15B 21/04

(54) **LUFTTROCKNUNGSEINRICHTUNG FÜR EIN SCHIENENFAHRZEUG**
AIR DRYING DEVICE FOR A RAIL VEHICLE
DISPOSITIF DE SÉCHAGE D'AIR POUR VÉHICULE FERROVIAIRE

(30) Priorität: 05.04.2012 DE 102012007028
(43) Veröffentlichungstag der Anmeldung: 11.02.2015
(73) Patentinhaber: KNORR-BREMSE Systeme für Schienenfahrzeuge GmbH, 80809 München (DE)
(72) Erfinder: URRA, Christian, 81371 München (DE); RIEDI, Angelika, 80687 München (DE); LORRA, Peter, 80375 München (DE)
(86) Internationale Anmeldenummer: PCT/EP2013/057129
(87) Internationale Veröffentlichungsnummer: WO 2013/150110

(56) Entgegenhaltungen:
- EP-A1- 0 933 118
- WO-A1-00/69696
- DE-A1-102010 031 306
- FR-A1- 2 270 929

## Beschreibung

Die vorliegende Erfindung betrifft eine Lufttrocknungseinrichtung für ein Schienenfahrzeug, eine Druckluftversorgungsanlage für ein Schienenfahrzeug und ein entsprechendes Schienenfahrzeug.

Bei Schienenfahrzeugen werden häufig pneumatische Bremsen und andere pneumatisch betriebene Einrichtungen eingesetzt. Daher zeigen Schienenfahrzeuge einen hohen Druckluftverbrauch und weisen Druckluftversorgungsseinrichtungen auf, um Druckluft bereitzustellen. Für derartige Druckluftversorgungsanlagen sind Lufttrocknungseinrichtungen vorgesehen, um Wasser aus der Luft zu entfernen, bevor sie den Verbrauchersystemen zugeführt wird. Dabei verwendetes Trockenmittel hält jedoch in der Regel aus Luft entnommenes Wasser zurück und verliert dadurch an Effizienz. Daher wird gelegentlich trockene Luft durch Trockenmittel geblasen, um darin aufgenommenes Wasser zu entfernen. Dieser Vorgang wird im Allgemeinen als Regeneration bezeichnet.

Die DE 10 2010 031 306 A1 beschreibt eine Druckluftaufbereitungseinrichtung mit zwei Lufttrocknungskartuschen, wobei während eines Regenerationsbetriebs getrocknete Druckluft durch eine zu regenerierende Lufttrocknungskartusche strömt und über eine von einer Luftzuführung getrennte Entlüftung ausgestoßen wird.

Eine Aufgabe der vorliegenden Erfindung besteht darin, die Effizienz und die Regeneration einer Lufttrocknungseinrichtung eines Schienenfahrzeugs zu verbessern.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Im Rahmen dieser Beschreibung kann ein Schienenfahrzeug einen oder mehrere Wagen, einen oder mehrere Zugfahrzeuge und/oder Triebwagen aufweisen. Es ist vorstellbar, dass ein Schienenfahrzeug einen oder mehrere pneumatisch betriebene Verbraucher aufweist, etwa eine pneumatische Bremseinrichtung. Ein Schienenfahrzeug kann eine Druckluftversorgungsanlage aufweisen, welche eine Lufttrocknungseinrichtung umfassen kann. Eine Druckluftversorgungsanlage kann einen oder mehrere Kompressoren und weitere Komponenten umfassen, etwa Ventileinrichtungen und/oder Filtereinrichtungen und/oder Ölabscheider. Eine Lufttrocknungseinrichtung kann allgemein einen ersten Lufttrocknerbehälter und einen zweiten Lufttrocknerbehälter aufweisen. Die Lufttrocknerbehälter können separat voneinander ausgebildet sein. Insbesondere kann vorgesehen sein, dass die Lufttrocknerbehälter separat voneinander mit Druckluft versorgbar und/oder entlüftbar sind. Dazu können ein oder mehrere geeignete Ventile vorgesehen sein. Insbesondere können der erste Lufttrocknerbehälter und der zweite Lufttrocknerbehälter jeweils separat für eine Regeneration mit Druckluft versorgbar und/oder entlüftbar sein. Dazu kann ein Lufttrocknerbehälter einerseits über ein zur Atmosphäre entlüftendes Ventil entlüftbar sein. Andererseits kann der Lufttrocknerbehälter mit Druckluft versorgbar sein, beispielsweise über ein geöffnetes Eingangsventil. Die Druckluft für eine Regeneration ist vorzugsweise trockene Luft. Die Ventile können ansteuerbar sein. Ein Lufttrocknerbehälter kann ein Trockenmittel aufweisen, welches innerhalb des Behälters angeordnet sein kann. Es ist vorstellbar, dass eine Lufttrocknungseinrichtung eine Luftzuführung aufweist. Eine Luftzuführung kann einen Lufteinlass und/oder eine Luftleitung umfassen. Die Luftzuführung kann an einen Kompressor angeschlossen oder anschließbar sein. Über die Luftzuführung kann Druckluft zur Lufttrocknungseinrichtung zuführbar sein. Es kann vorgesehen sein, dass die Lufttrocknungseinrichtung dazu ausgebildet ist, über die Luftzuführung einströmende Luft zu einem der Lufttrocknerbehälter zu führen, so dass dieser von der einströmenden Luft durchströmbar ist. Ein Trockenmittel kann beispielweise ein Wasser adsorbierendes Granulat, etwa Zeolith, und/oder zum Kondensieren von Wasser geeignete Partikel aufweisen, die beispielsweise Aluminium umfassen können. Es kann vorgesehen sein, dass zum Versorgen von Verbrauchern und/oder Vorratsbehältern mit Druckluft in einem Förderbetriebsmodus von einem Kompressor geförderte Luft der Lufttrocknungseinrichtung zugeführt wird und/oder zuführbar ist. Dabei kann allgemein ein Zustand, in welchem ein Kompressor Druckluft zu einer Luftzuführung der Lufttrocknungseinrichtung fördert, als Förderbetriebsmodus angesehen werden. Ein Betriebsmodus, in welchem ein Kompressor keine Druckluft zur Lufttrocknungseinrichtung fördert, kann als ein Nichtförderbetriebsmodus angesehen werden. Ein solcher Zustand kann beispielsweise auftreten, wenn ein Kompressor ausgeschaltet und/oder in einen Leerlaufbetrieb geschaltet wird, etwa weil alle gewünschten Druckniveaus bei zu versorgenden pneumatischen Einrichtungen erreicht sind. Ein Nichtförderbetriebsmodus kann insbesondere einen Zustand bezeichnen, in welchem das Schienenfahrzeug steht. Insbesondere kann eine Lufttrocknungseinrichtung dazu ausgebildet sein, in einem Förderbetriebsmodus zu trocknende Luft durch einen Lufttrocknerbehälter zu führen. Der Lufttrocknerbehälter, durch welchen zu trocknende Luft geführt wird, kann als aktiver Lufttrocknerbehälter bezeichnet werden. Im aktiven Behälter kann die Luft mit dem Trockenmittel interagieren und insbesondere Wasser und Feuchtigkeit an das Trockenmittel abgeben, so dass die Luft getrocknet werden kann. Die Lufttrocknungseinrichtung kann dazu ausgebildet sein, Luft nicht über ein Entlüftungsventil des aktiven Behälters zur Atmosphäre zu führen. Die Lufttrocknungseinrichtung kann dazu ausgebildet sein, getrocknete Luft aus einem aktiven Behälter zu einem Luftausgang zu führen. Dabei kann das Trockenmittel Wasser oder Feuchtigkeit zurückhalten. Allgemein kann ein Luftausgang eine oder mehrere Leitungen und/oder einen oder mehrere Druckluftanschlüsse aufweisen. Ein Luftausgang kann dazu ausgebildet sein, Druckluft aus dem ersten Lufttrocknerbehälter und/oder dem zweiten Lufttrocknerbehälter, insbesondere aus einem aktiven Behälter, zu einem Vorratsbereich zu führen. Über einen Druckluftanschluss kann der Luftausgang beispielsweise mit einem Vorratsbereich verbunden oder verbindbar sein. Ein Luftausgang kann derart angeordnet sein, dass der erste Lufttrocknerbehälter und/oder der zweite Lufttrocknerbehälter bezüglich einer fluidischen Verbindung oder einer Luftströmung zwischen dem Luftausgang und der Luftzuführung angeordnet und/oder schaltbar sind. Der Luftausgang kann bezüglich einer fluidischen Verbindung oder einer Luftströmung zwischen dem ersten Lufttrocknerbehälter und/oder dem zweiten Lufttrocknerbehälter und einem Vorratsbereich angeordnet und/oder schaltbar sein. Der nicht von zu trocknender Luft durchströmte Behälter kann als inaktiver Behälter bezeichnet werden. Es ist vorstellbar, dass der inaktive Behälter für die Bereitstellung von trockener Druckluft über den Luftausgang nicht wirksam ist. Der inaktive Lufttrocknerbehälter kann dabei in einem Regerationsmodus betreibbar sein. In einem Regenerationszustand kann ein Lufttrocknerbehälter allgemein zur Atmosphäre entlüftet sein, so dass einströmende Druckluft Wasser und Feuchtigkeit aus dem Trockenmittel des Behälters entnehmen und in die Atmosphäre transportieren kann. Insbesondere kann ein Lufttrocknerbehälter in den Regenerationszustand schaltbar sein, indem ein zur Entlüftung des Behälters vorgesehenes Ventil in seine Entlüftungsstellung geschaltet wird. Somit wird im Regenerationszustand das Trockenmittel getrocknet. Je trockener die zur Regeneration verwendete Luft, desto effizienter ist im Allgemeinen die Regeneration. Es kann vorgesehen sein, dass in einem Förderbetriebsmodus ein Teilstrom von getrockneter Luft aus dem aktiven Lufttrocknerbehälter zum inaktiven Lufttrocknerbehälter führbar ist, welcher in einem Regenerationszustand betrieben werden kann. Somit kann ein Teil der trockenen Luft zur Regeneration des nicht zum Trocknen von Luft eingesetzten Lufttrocknerbehälters dienen. Entsprechend kann in einem Förderbetriebsmodus jeweils ein Behälter zum Trocknen von Luft verwendet werden, während der andere Behälter regeneriert wird. Die Lufttrocknungseinrichtung kann dazu ausgebildet sein, im Förderbetriebsmodus die Lufttrocknerbehälter jeweils zwischen aktiv und inaktiv umzuschalten, so dass ihre Funktionen getauscht werden können. Somit kann ein vollständig regenerierter Behälter aktiv geschaltet werden, während ein bisher aktiver Behälter zur Regeneration inaktiv und/oder in seinen Regenerationszustand geschaltet wird. Der Luftausgang der Lufttrocknungseinrichtung kann allgemein mit einem Vorratsbereich verbunden oder verbindbar sein und/oder allgemein zur Versorgung weiterer Komponenten oder Einrichtungen mit trockener Luft vorgesehen sein. Ein Vorratsbereich kann dabei allgemein als ein Bereich und/oder eine Ansammlung pneumatischer Einrichtungen angesehen werden, welcher getrocknete und/oder über die Lufttrocknungseinrichtung bereitgestellte Luft aufzunehmen und/oder zu speichern vermag. Insbesondere kann ein Vorratsbereich einen oder mehrere Vorratsbehälter zum Speichern von Druckluft aufweisen. Es ist vorstellbar, dass der Vorratsbereich an Verbraucher und/oder Vorratsbehälter angeschlossen oder anschließbar ist. Ein Vorratsbehälter zum Speichern von Druckluft für eine Regeneration kann als Vorratsbereich oder als ein Teil eines Vorratsbereichs angesehen werden. Allgemein kann ein Vorgang, bei dem Luft durch Trockenmittel geblasen wird, um darin zurückgehaltenes Wasser zu entfernen, als Regeneration bezeichnet werden. Eine Verbindung zwischen zwei pneumatischen Komponenten, welche eine Luftströmung zwischen den Komponenten erlaubt, kann als fluidische Verbindung angesehen werden. Ein ansteuerbares Ventil kann ein elektrisch oder pneumatisch ansteuerbares Ventil sein. Insbesondere kann ein ansteuerbares Ventil ein Magnetventil sein oder ein solches zur Vorsteuerung aufweisen. Eine Lufttrocknungseinrichtung kann eine elektronische Steuereinrichtung aufweisen und/oder mit einer solchen verbunden oder verbindbar sein. Es kann vorgesehen sein, dass die Lufttrocknungseinrichtung und/oder Ventile und/oder elektropneumatische Komponenten der Lufttrocknungseinrichtung durch die Steuereinrichtung ansteuerbar sind. Dabei kann vorgesehen sein, dass Ventile und/oder die Lufttrocknungseinrichtung durch die Steuereinrichtung steuerbar und/oder schaltbar sind.

Die vorliegende Erfindung betrifft eine Lufttrocknungseinrichtung für ein Schienenfahrzeug, mit einem ersten Lufttrocknerbehälter, einem zweiten Lufttrocknerbehälter und einer Luftzuführung, durch oder über welche der Lufttrocknungseinrichtung zu trocknende Luft von einem Kompressor zuführbar ist. Die Lufttrocknungseinrichtung weist ferner einen Luftausgang auf, welcher mit einem Vorratsbereich verbunden oder verbindbar ist. Es ist ferner vorgesehen, dass die Lufttrocknungseinrichtung eine Regenerationsleitung umfasst, über welche Luft aus dem Vorratsbereich unter Umgehung des ersten Lufttrocknerbehälters und des zweiten Lufttrocknerbehälters und des Luftausgangs zur Luftzuführung führbar ist. Somit kann über die Regenerationsleitung beispielsweise auch in einem Nichtförderbetriebszustand eines Kompressors eine Regeneration erfolgen, wodurch sich insgesamt die Effizienz der Lufttrocknereinrichtung erhöht. Es kann allgemein vorgesehen sein, dass die Lufttrocknungseinrichtung dazu ausgebildet ist, dem ersten Lufttrocknerbehälter und/oder dem zweiten Lufttrocknerbehälter über die Luftzuführung einströmende Druckluft zuzuführen. Insbesondere kann die Lufttrocknungseinrichtung dazu ausgebildet sein, dem ersten Lufttrocknerbehälter und/oder dem zweiten Lufttrocknerbehälter wahlweise und/oder abwechselnd über die Luftzuführung einströmende Luft zuzuführen. Es kann ein Regenerationsbetriebsmodus vorgesehen sein, der ein Nichtförderbetriebsmodus sein kann. Die Lufttrocknungseinrichtung kann dazu ausgebildet sein, im Regenerationsbetriebsmodus trockene Luft aus dem Vorratsbereich über die Regenerationsleitung strömen zu lassen. Somit kann trockene Luft aus dem Vorratsbereich zur Luftzuführung strömen. Die Lufttrocknungseinrichtung kann dazu ausgebildet sein, im Regenerationsbetriebsmodus den ersten Lufttrocknerbehälter und/oder den zweiten Lufttrocknerbehälter in einen ihm zugeordneten Regenerationszustand zu schalten, insbesondere den ersten Lufttrocknerbehälter und/oder den zweiten Lufttrocknerbehälter zu entlüften. Es kann vorgesehen sein, dass die Lufttrocknungseinrichtung dazu ausgebildet ist, im Regenerationsbetriebsmodus der Lufttrocknungseinrichtung jeweils nur den ersten Lufttrocknerbehälter oder den zweiten Lufttrocknerbehälter in den zugeordneten Regenerationszustand zu schalten. Es ist vorstellbar, dass die Lufttrocknungseinrichtung es vermag, den jeweils nicht in den Regenerationszustand geschalteten Lufttrocknerbehälter dem in den Regenerationszustand geschalteten Lufttrocknerbehälter als aktiven Lufttrocknerbehälter vorzuschalten. Somit kann die dem in den Regenerationszustand geschalteten Lufttrocknerbehälter zugeführte Luft aus dem Vorratsbereich nochmals getrocknet werden, um die Regeneration noch effizienter durchzuführen. Alternativ ist vorstellbar, dass die Lufttrocknungseinrichtung es vermag, den nicht in den Regenerationszustand geschalteten Lufttrocknerbehälter von der Luftzuführung abzusperren, so dass die Luft aus dem Vorratsbereich nur durch den in den Regenerationszustand geschalteten Lufttrocknerbehälter zu strömen vermag. Alternativ oder zusätzlich kann die Lufttrocknungseinrichtung dazu ausgebildet sein, im Regenerationsbetriebsmodus eine Luftströmung von dem ersten Lufttrocknerbehälter und/oder dem zweiten Lufttrocknerbehälter zum Luftausgang und/oder zum Vorratsbereich zu unterbinden, etwa indem ein entsprechendes Ventil in eine Sperrschaltung geschaltet wird. Es kann vorgesehen sein, dass im Regenerationsbetriebsmodus die Lufttrocknerbehälter nacheinander in den Regenerationszustand geschaltet werden, so dass beide Behälter nacheinander regenerierbar sind. Dabei kann jeweils der andere Behälter vorgeschaltet sein oder von der Luftströmung abgesperrt sein. Es kann allerdings vorteilhaft sein, dass im Regenerationsbetriebsmodus nur einer der Lufttrocknerbehälter regeneriert wird und nach Beenden der Regeneration des einen Behälters der Regenerationsbetriebsmodus ebenfalls beendet wird. Somit kann nach Beenden des Regenerationsbetriebsmodus zumindest ein regenerierter Lufttrocknerbehälter bereitgestellt werden. Der Regenerationsbetriebsmodus der Lufttrocknungseinrichtung kann insbesondere ein Betriebsmodus sein, in welchem ein Kompressor nicht fördert und/oder das Schienenfahrzeug steht. Der Regenerationsbetriebsmodus kann basierend auf geeigneten Signalen ansteuerbar sein. Derartige Signale können beispielsweise den Stillstand des Schienenfahrzeugs und/oder einen Nichtförderzustand des Kompressors repräsentieren. Es ist vorstellbar, dass eine elektronische Steuereinrichtung dazu ausgebildet ist, die Lufttrocknungseinrichtung basierend auf derartigen Signalen in den Regenerationsbetriebszustand zu schalten.

In der Regenerationsleitung kann ein ansteuerbares Ventil vorgesehen sein, welches die Regenerationsleitung abzusperren vermag. Es kann vorgesehen sein, dass über das ansteuerbare Ventil in einer Durchlassstellung eine fluidische Verbindung über die Regenerationsleitung herstellbar ist. Somit kann auf einfache Art eine Regeneration mit Luft aus dem Vorratsbereich angesteuert werden. Insbesondere kann vorgesehen sein, dass die Lufttrocknungseinrichtung dazu ausgebildet ist, in einem Regenerationsbetriebsmodus das ansteuerbare Ventil zu öffnen.

Das ansteuerbare Ventil kann ein Magnetventil sein. Dies erlaubt eine besonders leichte Ansteuerung für eine Regenerierung.

Es ist vorstellbar, dass das ansteuerbare Ventil ein 2/2-Wegeventil ist. Ein solches Ventil eignet sich gut zur sicheren Absperrung oder Herstellung einer fluidischen Verbindung.

Der Vorratsbereich kann einen Vorratsbehälter aufweisen, aus welchem die Regenerationsleitung speisbar ist. Der Vorratsbehälter kann speziell zur Bereitstellung von Druckluft für einen Regenerationsbetriebsmodus vorgesehen sein. Ein solcher Vorratsbehälter kann insbesondere die Sicherheit in einem Regenerationsbetriebsmodus erhöhen, wenn das Schienenfahrzeug fährt, da dann andere Verbraucher nicht belastet werden. Insbesondere kann vorgesehen sein, dass weitere pneumatische Einrichtungen oder Behälter, die vom Vorratsbehälter in einem Förderbetriebsmodus stromabwärts liegen, in einem Regenerationsbetriebsmodus fluidisch vom Vorratsbehälter absperrbar sind, so dass die Druckluft für die Regeneration nur aus dem Vorratsbehälter entnommen wird. Somit werden andere Verbraucher nicht belastet. Alternativ oder zusätzlich kann vorgesehen sein, dass die Regenerationsleitung insbesondere im Regenerationsbetriebsmodus auch von anderen Komponenten aus dem Vorratsbereich speisbar ist.

Insbesondere kann der Vorratsbehälter über ein ansteuerbares Vorratsventil mit der Regenerationsleitung fluidisch verbindbar sein. Somit ist eine kontrollierte Versorgung mit Druckluft während des Regenerationsbetriebsmodus möglich. Das Vorratsventil kann beispielsweise dazu ausgebildet sein, eine fluidische Verbindung zwischen der Regenerationsleitung und stromabwärts des Vorratsbehälters gelegene Komponenten abzusperren.

Bei einer Weiterbildung kann die Lufttrocknungseinrichtung durch eine elektronische Steuereinrichtung ansteuerbar sein. Die Steuereinrichtung kann als Teil der Lufttrocknungseinrichtung oder separat davon ausgebildet sein. Insbesondere kann die Steuereinrichtung dazu ausgebildet sein, Ventile der Lufttrocknungseinrichtung zu schalten und/oder den Kompressor anzusteuern.

Die Lufttrocknungseinrichtung kann dazu eingerichtet sein, in einem Betriebszustand, in welchem keine Luft über einen Kompressor zugeführt wird, eine Regeneration des ersten Lufttrocknerbehälters und/oder des zweiten Lufttrocknerbehälters über die Regenerationsleitung durchzuführen. Es kann also in einem Nichtförderbetriebszustand eine Regeneration angesteuert werden, etwa über eine Steuereinrichtung. Es ist vorstellbar, dass zur Regeneration eines Lufttrocknerbehälters dieser in seinen Regenerationszustand schaltbar ist. Die Lufttrocknungseinrichtung kann dazu ausgebildet sein, zur Regeneration eines Lufttrocknerbehälters den anderen Lufttrocknerbehälter diesem vorzuschalten. Dabei kann der vorgeschaltete Lufttrocknerbehälter aktiv geschaltet sein, befindet sich also nicht im Regenerationszustand.

Die Erfindung betrifft außerdem eine Druckluftversorgungsanlage für ein Schienenfahrzeug mit einer hierin beschriebenen Lufttrocknungseinrichtung. Die Druckluftversorgungsanlage kann mindestens einen Kompressor und/oder einen Kühler und/oder eine Sicherheitsventileinrichtung und/oder eine elektronische Steuereinrichtung und/oder Schutzventileinrichtungen aufweisen. Kühler und/oder Sicherheitsventileinrichtung und/oder Schutzventileinrichtungen können der Lufttrocknungseinrichtung zugeordnet sein.

Es ist ferner ein Schienenfahrzeug mit einer hierin beschriebenen Druckluftversorgungsanlage und/oder einer hierin beschriebenen Lufttrocknungseinrichtung vorgesehen.

Die Erfindung wird nun mit Bezug auf die begleitenden Zeichnungen anhand bevorzugter Ausführungsformen beispielhaft erläutert.

Es zeigen:
- Figur 1: schematisch eine Lufttrocknungseinrichtung für ein Schienenfahrzeug in einem Förderbetriebsmodus, in welchem ein Kompressor Luft fördert; und
- Figur 2: schematisch die Lufttrocknungseinrichtung für ein Schienenfahrzeug in einem Regenrationsbetriebszustand, in welchem der Kompressor nicht fördert.

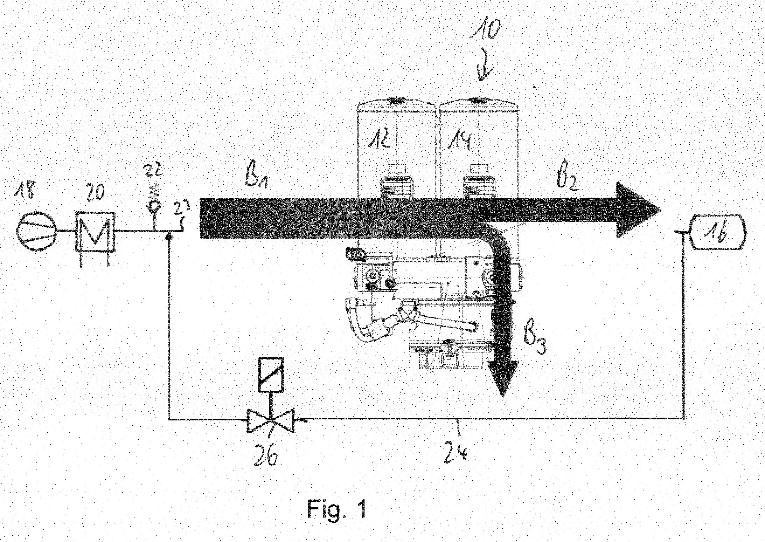

Figur 1 zeigt eine Lufttrocknungseinrichtung 10 eines Schienenfahrzeugs. Die Lufttrocknungseinrichtung 10 weist einen ersten Lufttrocknerbehälter 12 und einen zweiten Lufttrocknerbehälter 14 auf. An die Lufttrocknungseinrichtung 10 über einen Luftausgang angeschlossen ist ein Vorratsbereich 16, welcher eine oder mehrere Vorratsbehälter und/oder ein oder mehrere Verbraucher umfassen kann. Ebenfalls an die Lufttrocknungseinrichtung 10 angeschlossen ist ein Kompressor 18, der über einen optional vorhandenen Kühler 20 mit einer Luftzuführung 23 der Lufttrocknungseinrichtung 10 verbunden oder verbindbar sein kann. Es kann ferner ein Sicherheitsventil 22 vorgesehen sein, über welches ein Sicherungsdruck einstellbar sein kann. Das Sicherungsventil 22 ist in diesem Beispiel in der Luftzuführung 23 der Lufttrocknungseinrichtung 10 vorgesehen, es kann allerdings auch an einer geeigneten anderen Stelle angeordnet sein. Wird ein Druck in der Anlage erreicht, welcher einen eingestellten Sicherungsdruck übersteigt, so öffnet das Sicherheitsventil 22 zur Atmosphäre und stellt somit sicher, dass der Sicherungsdruck nicht überschritten wird. Es ist ferner eine Regenerationsleitung 24 vorgesehen, welche eine fluidleitende Verbindung von dem Vorratsbereich 16 zur Luftführung 23 herzustellen vermag. In die Leitung 24 ist ein ansteuerbares Ventil 26 eingebaut. Das Ventil 26 kann als Regenerationsventil angesehen werden. Es ist vorstellbar, dass das Ventil 26 als 2/2-Wegeventil ausgebildet ist, welches eine fluidleitende Verbindung durch die Leitung 24 zu öffnen oder zu sperren vermag. Das Ventil 26 kann durch eine elektronische Steuereinrichtung ansteuerbar sein, etwa eine Steuereinrichtung der Lufttrocknungseinrichtung 10 und/oder eine Fahrzeugsteuereinrichtung. Im normalen Betrieb des Schienenfahrzeugs fördert der Kompressor 18 Druckluft durch den Kühler 20 zur Luftzuführung 23 der Lufttrocknungseinrichtung 10. Es liegt also ein Förderbetriebszustand vor. Die Lufttrocknungseinrichtung 10 ist dabei derart geschaltet, dass jeweils einer der Lufttrocknerbehälter 12 und 14 von zu trocknender Druckluft vom Kompressor 18 durchströmt wird, um diese zu trocknen. Dieser Lufttrocknerbehälter, in der Figur 1 der Behälter 12, wirkt als aktiver Lufttrocknerbehälter zum Trocknen von Luft. Der zu trocknende Luftstrom ist in der Figur als B1 gekennzeichnet. Der aus dem aktiven Behälter 12 strömende getrocknete Luftstrom wird durch eine Luftführungseinrichtung in zwei Teilströme B2 und B3 aufgeteilt. Der Teilstrom B2, der größer ist als der Teilstrom B3, wird über einen Luftausgang zum Vorratsbereich 16 geführt. Der Teilstrom B3 wird durch den inaktiven Lufttrocknerbehälter 14 geführt, der in seinen Regenerationszustand geschaltet ist. Dadurch findet eine Regenerierung des inaktiven Behälters 14 statt, während über den Behälter 12 und den Luftausgang trockene Luft in den Vorratsbereich strömt. Der durch die Regeneration des inaktiven Behälters angefeuchtete Teilstrom B3 wird über eine geeignete Ventileinrichtung nach außen in die Atmosphäre abgeführt. Während des Kompressorbetriebs werden die Rollen der Lufttrocknerbehälter 12, 14 regelmäßig ausgetauscht, so dass die Behälter abwechselnd aktiv und in den Regenerationszustand geschaltet sind. So kann zu trocknende Luft B1 vom Kompressor 18 zum Trocknen in den zweiten Lufttrocknerbehälter 14 geführt werden. Nachdem sie in dem Lufttrocknerbehälter 14 getrocknet wurde, kann ein entsprechender Teilstrom B2 in den Vorratsbereich 16 strömen. Ein Teilstrom B3 wird jedoch durch den ersten Lufttrocknerbehälter 12 geführt, um diesen zu regenerieren. Der Wechsel zwischen den Rollen der Lufttrocknerbehälter kann durch eine elektronische Steuereinrichtung gesteuert werden. Es können geeignete Ventilvorrichtungen und Leitungen vorgesehen sein, um die beschriebene Betriebsweise zu ermöglichen. Der Wechsel der Rollen der Lufttrocknerbehälter 12, 14 kann in regelmäßigen zeitlichen Abständen und/oder basierend auf Sensorsignalen erfolgen. Insbesondere können Sensoren zur Bestimmung der Feuchtigkeit eines oder mehrerer der Teilströme B1, B2 oder B3 vorgesehen sein. Basierend auf den Feuchtigkeitsmessungen kann beispielsweise ermittelt werden, ob der aktive Lufttrocknerbehälter sich in der Nähe der Sättigung des Trockenmittels befindet und somit die zugeführte Luft wenig effizient zu trocknen vermag. Dann kann ein Wechsel zu dem anderen Lufttrocknerbehälter vorgenommen werden. Alternativ oder zusätzlich kann die Lufttrocknungseinrichtung 10 dazu ausgebildet sein, einen Wechsel nach vollständiger Regeneration des inaktiven Behälters durchzuführen.

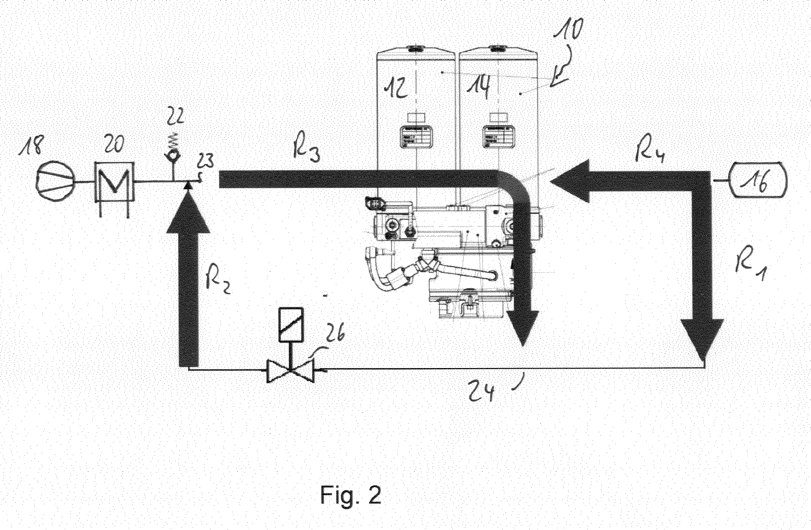

Figur 2 zeigt eine Lufttrocknungseinrichtung 10, wie sie in Figur 1 gezeigt ist, in einem Regenerationsbetriebsmodus. In diesem Zustand wird über den Kompressor 18 keine Druckluft zur Lufttrocknungseinrichtung 10 gefördert. Ein solcher Zustand kann beispielsweise auftreten, wenn der Kompressor abgeschaltet ist oder in einer Leerlaufschaltstellung betrieben wird, in welcher er in die Atmosphäre fördert. Dies geschieht üblicherweise, wenn der Druck im Vorratsbereich 16 ein gewünschtes Niveau erreicht hat. Die Lufttrocknungseinrichtung 10 kann dazu ausgebildet sein, den Regenerationsbetriebsmodus insbesondere dann anzusteuern, wenn das Schienenfahrzeug steht und keine oder wenig Druckluft verbraucht. Im in der Figur 2 gezeigten Regenerationsbetriebsmodus ist das Regenerationsventil 26 in seine Durchlassstellung geschaltet. In dieser Stellung kann Druckluft aus dem Vorratsbereich 16, insbesondere aus einem Regenerationsluftbehälter, durch die Leitung 24 in die Luftzuführung 23 der Lufttrocknungseinrichtung 10 strömen. Die Luft aus dem Vorratsbereich 16 ist getrocknete Luft. Diese Luft kann über die Leitung 23 mindestens einem der Lufttrocknerbehälter 12, 14 zur Regeneration zugeführt werden. Im in Figur 2 gezeigten Beispiel ist vorgesehen, dass die Regenerationsluft zuerst durch einen der Lufttrocknerbehälter, im Beispiel den Lufttrocknerbehälter 12, geführt wird, um dort getrocknet zu werden. Dadurch wird die schon trockene Regenerationsluft weiter getrocknet. Diese getrocknete Regenerationsluft wird dann dem Lufttrocknerbehälter 14 zugeführt, um diesen zu regenerieren. Die Effizienz der Regeneration ist dabei besonders hoch, da die zur Regeneration verwendete Luft besonders trocken ist. Somit ist in diesem Beispiel im Regenerationsbetriebsmodus einem zu regenerierenden Behälter der andere als aktiver Behälter vorgeschaltet.

Nach der Regeneration des einen Trocknerbehälters 14 kann der andere Trocknerbehälter 12 regeneriert werden. Dabei kann vorgesehen sein, dass die Regenerationsluft beim Regenerieren des zweiten Behälters nicht durch den bereits vollständig regenerierten Behälter geführt wird, um dort vorgetrocknet zu werden. Somit können zwei regenerierte Lufttrocknerbehälter 12, 14 bereitgestellt sein, wenn der Kompressor wieder zu fördern beginnt und/oder das Fahrzeug wieder bewegt wird. Es ist allerdings auch vorstellbar, dass nur einer der Lufttrocknerbehälter in diesem Regenerationsbetriebsmodus regeneriert wird, so dass bei Wiederaufnahme oder Beginn einer Fahrt auf jeden Fall ein vollständig regenerierter Lufttrocknerbehälter bereitsteht. Die sich in diesem Betriebsmodus ergebenden Teilströme sind als R1, R2, R3 und R4 gekennzeichnet. Aus dem Vorratsbereich 16 strömt der Luftstrom R1 über die Regenerationsleitung 24, durch das Ventil 26, um als Teilstrom R2 in die Luftzuführung 23 zu strömen. Die Luftzuführung 23 kann allgemein beispielsweise vermittels eines Rückschlagventils gegen eine Strömung in Richtung des Kompressors abgesichert sein. Der Teilstrom R2 strömt über die Luftzuführung 23 als Strom R3 durch den aktiven Behälter 12, um dort getrocknet zu werden, bevor er durch den in den Regenerationszustand geschalteten Behälter 14 strömt. Ein Teilstrom aus der Lufttrocknungseinrichtung 10 zum Vorratsbereich 16 über den Luftausgang ist in diesem Beispiel unterbunden, etwa durch eine geeignete Ventileinrichtung, die ein entsprechendes Rückschlagventil und/oder ein Absperrventil aufweisen kann. In einer Luftführung zwischen dem Luftausgang der Lufttrocknungseinrichtung 10 und dem Vorratsbereich 16 kann sich ein Teilstrom R4 ausbilden, der am Luftausgang anstehen kann. Es kann vorgesehen sein, dass die Lufttrocknereinrichtung 10 es vermag, einen Teilstrom R4 zu dem zu regenerierenden Behälter 14 strömen zu lassen, um den Teilstrom R3 zu verstärken, etwa über ein erwähntes Rückschlagventil. Ein solches Rückschlagventil kann einem Abschaltventil parallel geschaltet sein, über welches in einem Förderbetriebsmodus Druckluft zum Vorratsbereich 16 zu strömen vermag. Es ist zu erkennen, dass über die Regenerationsleitung 24 Luft aus dem Vorratsbereich 16 unter Umgehung des Luftausgangs und der Lufttrocknerbehälter 12, 14 zur Luftzuführung 23 führbar ist und/oder geführt wird.

### Bezugszeichenliste

- 10: Lufttrocknungseinrichtung
- 12: Lufttrocknerbehälter
- 14: Lufttrocknerbehälter
- 16: Vorratsbereich
- 18: Kompressor
- 20: Kühler
- 22: Sicherheitsventil
- 23: Luftzuführung
- 24: Regenerationsleitung
- 26: Ventil

## Patentansprüche

1. Lufttrocknungseinrichtung (10) für ein Schienenfahrzeug, mit
einem ersten Lufttrocknerbehälter (12);
einem zweiten Lufttrocknerbehälter (14);
einer Luftzuführung (23), durch welche der Lufttrocknungseinrichtung (10) zu trocknende Luft von einem Kompressor (18) zuführbar ist;
einem Luftausgang, welcher mit einem Vorratsbereich (16) verbunden oder verbindbar ist;
**dadurch gekennzeichnet, dass** die Lufttrocknungseinrichtung (10) eine Regenerationsleitung (24) umfasst, über welche Luft aus dem Vorratsbereich (16) unter Umgehung des ersten Lufttrocknerbehälters (12) und/oder des zweiten Lufttrocknerbehälters (14) und/oder des Luftausgangs zur Luftzuführung (23) führbar ist.

2. Lufttrocknungseinrichtung nach Anspruch 1, wobei in der Regenerationsleitung (24) ein ansteuerbares Ventil (26) vorgesehen ist, welches die Regenerationsleitung (24) abzusperren vermag.

3. Lufttrocknungseinrichtung nach Anspruch 2, wobei das ansteuerbare Ventil (26) ein Magnetventil ist.

4. Lufttrocknungseinrichtung nach Anspruch 2 oder 3, wobei das ansteuerbare Ventil (26) ein 2/2-Wegeventil ist.

5. Lufttrocknungseinrichtung nach einem der vorhergehenden Ansprüche, wobei der Vorratsbereich (16) einen Vorratsbehälter aufweist, aus welchem die Regenerationsleitung (24) speisbar ist.

6. Lufttrocknungseinrichtung nach Anspruch 5, wobei der Vorratsbehälter (16) über ein ansteuerbares Vorratsventil mit der Regenerationsleitung (24) fluidisch verbindbar ist.

7. Lufttrocknungseinrichtung nach einem der vorhergehenden Ansprüche, wobei die Lufttrocknungseinrichtung (10) durch eine elektronische Steuereinrichtung ansteuerbar ist.

8. Lufttrocknungseinrichtung nach einem der vorhergehenden Ansprüche, wobei die Lufttrocknungseinrichtung (10) dazu eingerichtet ist, in einem Betriebszustand, in welchem keine Luft über einen Kompressor (18) zugeführt wird, eine Regeneration des ersten Lufttrocknerbehälters (12) und/oder des zweiten Lufttrocknerbehälters (14) über die Regenerationsleitung (24) durchzuführen.

9. Druckluftversorgungsanlage für ein Schienenfahrzeug mit einer Lufttrocknungseinrichtung (10) nach einem der vorhergehenden Ansprüche.

10. Schienenfahrzeug mit einer Druckluftversorgungsanlage nach Anspruch 9 oder einer Lufttrocknungseinrichtung (10) nach einem der Ansprüche 1 bis 8.

## Claims

1. Air drying device (10) for a rail vehicle, comprising
a first air drier container (12);
a second air drier container (14);
an air feed (23), through which air to be dried can be fed to the air drying device (10) from a compressor (18);
an air outlet connected or connectable to a reservoir region (16);
**characterised in that** the air drying device (10) comprises a regeneration line (24), via which air from the reservoir region (16) can be fed to the air feed (23) while bypassing the first air drier container (12) and/or the second air drier container (14) and/or the air outlet.

2. Air drying device according to claim 1, wherein a selectable valve (26) capable of blocking the regeneration line (24) is provided in the regeneration line (24).

3. Air drying device according to claim 2, wherein the selectable valve (26) is a solenoid valve.

4. Air drying device according to claim 2 or 3, wherein the selectable valve (26) is a 2/2-way valve.

5. Air drying device according to any of the preceding claims, wherein the reservoir region (16) comprises a reservoir from which the regeneration line (24) can be fed.

6. Air drying device according to claim 5, wherein the reservoir (16) can be fluidically connected to the regeneration line (24) via a pilot-controllable reservoir valve.

7. Air drying device according to any of the preceding claims, wherein the air drying device (10) can be activated by an electronic control unit.

8. Air drying device according to any of the preceding claims, wherein the air drying device (10) is designed for carrying out a regeneration of the first air drier container (12) and/or the second air drier container (14) via the regeneration line (24) in an operating state in which no air is fed via a compressor (18).

9. Compressed air supply system for a rail vehicle, comprising an air drying device (10) according to any of the preceding claims.

10. Rail vehicle with a compressed air supply system according to claim 9 or an air drying device (10) according to any of claims 1 to 8.

## Revendications

1. Dispositif (10) de séchage d'air pour un véhicule ferroviaire, comprenant
un premier récipient (12) de sécheur d'air ;
un deuxième récipient (14) de sécheur d'air ;
un conduit (23) d'apport d'air, par lequel de l'air à sécher peut être apporté au dispositif (10) de séchage d'air par un compresseur (18) ;
une sortie d'air, qui communique ou qui peut communiquer avec une partie (16) de réserve ;
**caractérisé en ce que** le dispositif (10) de séchage d'air comprend un conduit (24) de régénération, par lequel de l'air peut être envoyé de la partie (16) de réserve au conduit (23) d'apport d'air, en contournant le premier récipient (12) de sécheur d'air et/ou le deuxième récipient (14) de sécheur d'air et/ou la sortie d'air.

2. Dispositif de séchage d'air suivant la revendication 1, dans lequel il est prévu, dans le conduit (24) de régénération, une vanne (26) qui peut être commandée et qui peut obturer le conduit (24) de régénération.

3. Dispositif de séchage d'air suivant la revendication 2, dans lequel la vanne (26) qui peut être commandée est une électrovanne.

4. Dispositif de séchage d'air suivant la revendication 2 ou 3, dans lequel la vanne (26) qui peut être commandée est une vanne à 2/2 voies.

5. Dispositif de séchage d'air suivant l'une des revendications précédentes, dans lequel la partie (16) de réserve a un récipient de réserve, à partir duquel le conduit (24) de régénération peut être alimenté.

6. Dispositif de séchage d'air suivant la revendication 5, dans lequel le récipient (16) de réserve peut être mis en communication fluidiquement avec le conduit (24) de régénération par une vanne de réserve pouvant être commandée.

7. Dispositif de séchage d'air suivant l'une des revendications précédentes, dans lequel le dispositif (10) de séchage d'air peut être commandé par un dispositif électronique de commande.

8. Dispositif de séchage d'air suivant l'une des revendications précédentes, dans lequel le dispositif (10) de séchage d'air est conçu pour, dans un état de fonctionnement, dans lequel de l'air n'est pas envoyé à un compresseur (18), effectuer, par l'intermédiaire du conduit (24) de régénération, une régénération du premier récipient (12) de sécheur d'air et/ou du deuxième récipient (14) de sécheur d'air.

9. Système d'alimentation en air comprimé d'un véhicule ferroviaire, comprenant un dispositif (10) de séchage d'air suivant l'une des revendications précédentes.

10. Véhicule ferroviaire ayant un système d'alimentation en air comprimé suivant la revendication 9 ou un dispositif (10) de séchage d'air suivant l'une des revendications 1 à 8.
